(19)

Europäisches
Patentamt
European
Patent Office
Office européen
des brevets

(11) **EP 4 286 504 A1**

(12) # EUROPEAN PATENT APPLICATION
published in accordance with Art. 153(4) EPC

(43) Date of publication:
**06.12.2023  Bulletin 2023/49**

(21) Application number: **22745704.1**

(22) Date of filing: **20.01.2022**

(51) International Patent Classification (IPC):
***C12G 3/04*** *(2019.01)*

(52) Cooperative Patent Classification (CPC):
**C12G 3/04**

(86) International application number:
**PCT/JP2022/001926**

(87) International publication number:
**WO 2022/163483 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **26.01.2021   JP 2021010019**

(71) Applicant: **Suntory Holdings Limited
Osaka 530-8203 (JP)**

(72) Inventors:
• **FUJITA, Shunya
Kawasaki-shi, Kanagawa 211-0067 (JP)**

• **OMOTO, Tetsuya
Kawasaki-shi, Kanagawa 211-0067 (JP)**
• **YONEZAWA, Chie
Kawasaki-shi, Kanagawa 211-0067 (JP)**
• **SEIKI, Hiroshi
Kawasaki-shi, Kanagawa 211-0067 (JP)**

(74) Representative: **Vossius & Partner
Patentanwälte Rechtsanwälte mbB
Siebertstraße 3
81675 München (DE)**

(54)  **ALCOHOLIC BEVERAGE CONTAINING FRUIT JUICE**

(57)    One of the objects of the present invention is to enhance a fruit sensation which tends to be insufficient in sugar-free, fruit juice-containing alcoholic beverages containing no high intensity sweetener. In this invention, a specified amount of a polysaccharide or polysaccharides with a degree of polymerization of not less than 3 is used in the fruit juice-containing alcoholic beverage, and the acidity in terms of citric acid is adjusted to be within a specified range.

EP 4 286 504 A1

**Description**

TECHNICAL FIELD

The present invention relates to a fruit juice-containing alcoholic beverage containing no high intensity sweetener. More particularly, this invention relates to said beverage wherein the beverage has a low total content of a monosaccharide and a disaccharide excluding sugar alcohols, contains a specified amount of a polysaccharide with a degree of polymerization of not less than 3, and has an acidity in terms of citric acid, of not less than a specified value, and methods related thereto.

BACKGROUND ART

Fruit juice-containing alcoholic beverages are characterized in that a fruit juice is incorporated in alcoholic beverages to add the sweetness, sourness and aroma of the fruit juice to the alcoholic beverages, thereby improving the palatability of the alcoholic beverages. There are many commercially available products of fruit juice-containing alcoholic beverages, such as those containing a juice from a citrus fruit such as grapefruit, lemon, lime or orange, and those containing a juice from other fruits such as Japanese apricot, apple, grape or strawberry. Examples of such alcoholic beverage products include *chūhai* (shochu-based beverage).

When fruit juice-containing alcoholic beverages are drunk, the sweetness and sourness, fullness of taste, and other properties derived from a fruit can be enjoyed. Fruit juices are useful in improving the palatability of alcoholic beverages, since they have effects to add the depth or a body sensation to the taste of alcoholic beverages by virtue of their components such as saccharides, citric acid and amino acids, and to reduce a pungent sensation derived from an alcohol.

In recent years, as consumers' awareness of healthcare is increasing, there has been a need for sugar-free alcoholic beverages whose calorie content is reduced as much as possible. For example, PTL 1 discloses a sugar-free alcoholic beverage comprising a high intensity sweetener and a citrus fruit juice. As referred to above, the term "sugar" refers to monosaccharides and disaccharides which are not sugar alcohols. Further, alcoholic beverages whose calorie and saccharide contents are reduced by use of a high intensity sweetener are considered problematic due to their lingering sweet aftertaste derived from the high intensity sweetener.

With regard to fruit juice-containing alcoholic beverages, PTL 2 discloses a flavor improvement composition for providing a beverage having a fruit juice sensation but no sticky flavor, wherein the mixing ratio of malic acid and citric acid is in the range of from 10:90 to 40:60.

PTL 3 includes disclosures about freeze-crush-infusion liquors of fruits or the like.

CITATION LIST

PATENT LITERATURES

PTL 1: Japanese Unexamined Patent Application Publication No. JP 2011-135837
PTL 2: Japanese Unexamined Patent Application Publication No. JP 2013-126393
PTL 3: International Patent Publication No. WO 2006/009252

SUMMARY OF INVENTION

TECHNICAL PROBLEM

Sugars, fruit juices containing sugars, and sweeteners are expected to have effects to add the depth of taste or a body sensation to beverages by virtue of their sweetness or their components such as sugars, and also to reduce a pungent sensation. However, it is not much expected that sugar-free alcoholic beverages whose sugar content is limited have the same effects as above. Therefore, sugar-free alcoholic beverages have problems in that they not only tend to be lacking in a fruit juice sensation or fruit sensation but are likely to become prominent in terms of a pungent sensation derived from an alcohol. These problems become more serious in the case of sugar-free alcoholic beverages containing no high intensity sweetener.

An object of the present invention is to enhance a fruit sensation which tends to be insufficient in sugar-free, fruit juice-containing alcoholic beverages containing no high intensity sweetener. Another object of this invention is to reduce an alcohol pungent sensation in sugar-free, fruit juice-containing alcoholic beverages containing no high intensity sweetener.

SOLUTION TO PROBLEM

The present inventors have conducted research to seek a means for achieving the aforementioned objects, and as a result found that the use of a polysaccharide or polysaccharides with a degree of polymerization of not less than 3 is effective for that purpose. The inventors also found that the value of acidity in terms of citric acid also affects achievement of the objects of this invention.

The present invention is directed, but not limited, to the following.

1. An alcoholic beverage containing a fruit juice or fruit juices and containing no high intensity sweetener, wherein:

the total content of a monosaccharide or monosaccharides and a disaccharide or disaccharides excluding sugar alcohols is less than 0.5 w/w%;
the total content of a polysaccharide or polysaccharides with a degree of polymerization of not less than 3 is not less than 0.08 w/v%; and
the acidity is not less than 0.1 g/100 mL in terms of citric acid.

2. The beverage as set forth in 1, wherein the total content of the fruit juice(s) is not less than 0.5 w/w% in terms of percent fruit juice content.
3. The beverage as set forth in 2, wherein the fruit juice(s) is a citrus fruit juice.
4. The beverage as set forth in any one of 1 to 3, wherein the fruit juice(s) is a cloudy fruit juice.
5. The beverage as set forth in any one of 1 to 4, wherein the alcohol content is in the range of from 1 to 10 v/v%.
6. The beverage as set forth in any one of 1 to 5, wherein the polysaccharide(s) is a dietary fiber.
7. The beverage as set forth in 6, wherein the dietary fiber is at least one selected from the group consisting of indigestible dextrin and polydextrose.
8. The beverage as set forth in any one of 1 to 7, wherein the beverage contains carbon dioxide.
9. The beverage as set forth in any one of 1 to 8, wherein the beverage contains a freeze-crush-infusion liquor of a fruit and/or vegetable.
10. A method for producing an alcoholic beverage containing a fruit juice or fruit juices and containing no high intensity sweetener, the method comprising the steps of:

adjusting the total content of a monosaccharide or monosaccharides and a disaccharide or disaccharides excluding sugar alcohols in the beverage to less than 0.5 w/w%;
adjusting the total content of a polysaccharide or polysaccharides with a degree of polymerization of not less than 3 in the beverage to not less than 0.08 w/v%; and
adjusting the acidity in the beverage to not less than 0.1 g/100 mL in terms of citric acid.

11. The method as set forth in 10, further comprising the steps of:

freezing at least one fruit and/or vegetable to obtain a frozen product;
finely crushing the frozen product to obtain a freeze-finely-crushed product;
infusing the finely-crushed product, as it is or after thawed into a paste form, in an alcohol-containing liquid to obtain an infusion liquor; and
mixing the infusion liquor with other material;
wherein the beverage comprises the infusion liquor.

ADVANTAGEOUS EFFECTS OF INVENTION

The present invention can enhance a fruit sensation in a sugar-free alcoholic beverage containing no high intensity sweetener. This invention can also reduce an alcohol pungent sensation in such a beverage. As referred to herein, the term "fruit sensation" refers to a taste of the fullness of fruit or a natural taste that makes one feel the inherent flavor of a fruit.

DESCRIPTION OF EMBODIMENTS

The following provides descriptions of a fruit juice-containing alcoholic beverage, and related methods according to the present invention.

(Polysaccharide)

The beverage of the present invention comprises a polysaccharide or polysaccharides with a degree of polymerization of not less than 3. The total content of the polysaccharide(s) is not less than 0.08 w/v%, and is in the range of preferably from 0.08 to 2.4 w/v%, more preferably from 0.08 to 1.6 w/v%, still more preferably from 0.24 to 1.6 w/v%. When the content of sthepolysaccharide(s) falls within any of the aforementioned ranges, a fruit sensation can be fully enhanced, or an alcohol pungent sensation can be fully reduced.

The aforementioned polysaccharide(s) refer to saccharide(s) composed of 3 or more molecules of monosaccharides linked through glycosidic linkages.

Examples of such polysaccharide(s) include digestible polysaccharides such as starch, and indigestible dietary fibers. Preferred examples of the polysaccharide(s) include dietary fibers, especially water-soluble dietary fibers, including pectin, xanthane gum, soybean polysaccharide, guar gum, gum arabic, agar, carrageenan, polydextrose, and indigestible dextrin. Particularly preferred polysaccharides are indigestible dextrin and polydextrose.

Indigestible dextrin is a kind of dextrin, and is an indigestible starch degradation product that is difficult to digest with human digestive enzymes. Indigestible dextrin can be obtained by, for example, hydrolysis of pyrodextrin with $\alpha$-amylase and glucoamylase. In the present invention, indigestible dextrin also includes reduced indigestible dextrin which is hydrogenated.

As referred to herein, the term "soybean polysaccharide" refers to a water-soluble dietary fiber derived from soybean and mainly containing hemicellulose. The soybean polysaccharide can generally be produced through extraction and purification of insoluble materials, such as soy pulp produced during the process of production of soybean processed products such as *Tofu* from soybeans.

Guar gum is a water-soluble natural polysaccharide obtained from guar beans. A guar gum molecule consists of a mannose backbone and galactose side chains. Galactose and mannose are homogeneously present at a ratio of 1:2.

Gum arabic is a polysaccharide obtained from a resin from a tree of Acacia senegal. A gum arabic molecule has a polyuronic acid structure, in which the backbone consists of galactose and the side chains are composed of galactose, arabinose, rhamnose, and glucuronic acid.

Agar is a polysaccharide obtained from a mucilage of red algae such as *Gelidium elegans* and *Gracilaria vermiculophylla.* Agar is mainly composed of agarose and agaropectin.

Carrageenan is a polysaccharide extracted from red algae, and is composed of D-galactose and sulfuric acid. Carrageenan always has sulphate groups, and is classified, based on the mode of bonding of sulphate groups, into three forms: kappa-carrageenan, iota-carrageenan, and lambda-carrageenan. All three forms of carrageenan can be used in the present invention, but preferred forms of carrageenan are kappa-carrageenan and iota-carrageenan.

Polydextrose is a water-soluble dietary fiber obtained by polymerization of glucose with sorbitol.

Pectin is a kind of polysaccharide. The main constituent sugars of pectin are galacturonic acid and galacturonic acid methyl ester.

Xanthane gum is a kind of polysaccharide having repeated units each consisting of two molecules of glucose, two molecules of mannose, and one molecule of glucuronic acid.

The polysaccharide(s) with a degree of polymerization of not less than 3 also include oligosaccharides, which are polysaccharides with a degree of polymerization of from 3 to 10. Examples of the oligosaccharides include, but are not limited to; glucooligosaccharides, such as xylooligosaccharides (*e.g.*, xylotriose, xylotetraose, xylopentaose, xylohexaose, xyloheptaose), and maltooligosaccharides (*e.g.*, maltotriose, maltotetraose, maltopentaose, maltohexaose, maltoheptaose); and nigerooligosaccharides (*e.g.*, nigerotriose, nigerotetraose, nigeropentaose, nigerohexaose, nigeroheptaose). Preferred oligosaccharides are xylooligosaccharides, maltooligosaccharides, glucooligosaccharides, and the like. The beverage of the present invention may contain only a single type of oligosaccharide, or may contain two or more types of oligosaccharides. There are commercially available mixtures of multiple types of oligosaccharides, and such commercial mixtures can also be used.

The beverage of the present invention may contain only one type of the aforementioned polysaccharides, or may contain two or more types of them.

When the type of the polysaccharide(s) is limited to any of the specified types of polysaccharides as mentioned above, the total content of such a limited scope of polysaccharides is also within any of the same ranges as mentioned above.

The method for measuring the content of a polysaccharide is not particularly limited, and for example, the content of a polysaccharide can be measured using HPLC. For example, the content of polydextrose or indigestible dextrin can be measured using a high-performance liquid chromatography method (enzymatic-HPLC method), which is a dietary fiber analysis method described in Eishin Notice No. 13 ("On Analysis Methods, etc. for Nutrients, etc. Listed in the Nutrition Labelling Standards").

(Acidity)

The acidity in the beverage of the present invention is not less than 0.1 g/100 mL, and is in the range of preferably from 0.2 to 0.6 g/100 mL, more preferably from 0.3 to 0.6 g/100 mL, in terms of citric acid. Another preferred acidity is in the range of from 0.4 to 0.6 g/100 mL. When the acidity falls within any of the aforementioned ranges, a fruit sensation can be fully enhanced.

As referred to herein, the term "acidity" refers to a value obtained by converting the total molar concentration of the acids in a beverage into citric acid content based on the assumption that all the acids in the beverage are monovalent acids. In the case of carbonated beverages, this term refers to an acidity in the beverages after degassing. The total molar concentration of the acids in a beverage sample can be measured by a known method such as titration -- for example, said total molar concentration can be calculated based on the amount added of sodium hydroxide required until a sample becomes neutral (pH 8.2). More specifically, 10 mL of a sample is pipetted using a Vollpipette into a 200 mL beaker and diluted to about 100 mL with addition of distilled water, and then an electrode of a pH meter is placed in the diluted solution. Thereafter, while the solution is stirred, a 1/10 N sodium hydroxide solution is added dropwise from a burette. The time point at which the scale of the pH meter reads 8.2 is regarded as an endpoint. The amount of the sodium hydroxide solution required until the endpoint is reached is used to calculate the total molar concentration of the acids in the sample. Further, in consideration of the obtained total molar concentration of the acids, the molecular weight of citric acid (for the sake of confirmation, the "citric acid" as referred to above refers to free citric acid), and the number of carboxylic acids in citric acid, the total acid content in the sample is calculated according to the following equation: total acid content = total molar concentration of the acids in a sample $\times$ (molecular weight of citric acid / number of carboxylic acids in citric acid). Additionally, titration may be performed using an automatic titrator.

Typical examples of the acids contained in the beverage of the present invention include citric acid, malic acid, lactic acid, phosphoric acid, and tartaric acid. Citric acid, malic acid, and tartaric acid are particularly preferred.

(Fruit juice)

The fruit juice-containing alcoholic beverage of the present invention comprises a fruit juice or fruit juices.

The type of the fruit juice(s) is not particularly limited. Examples of fruit juices include, but are not limited to, juices from citrus fruits (*e.g.*, orange, *Citrus unshiu,* grapefruit, lemon, lime, *Citrus junos, Citrus iyo, Citrus natsudaidai, Citrus hassaku, Citrus reticulata* var *poonensis, Citrus depressa, Citrus sphaerocarpa*), pomes (*e.g.,* apple, Japanese pear), drupes (*e.g.*, peach, Japanese apricot, apricot, Japanese plum, cherry), berries (*e.g.*, grape, blackcurrant, blueberry), tropical and subtropical fruits (*e.g.*, pineapple, guava, banana, mango, lychee), and fruity vegetables (*e.g.*, strawberry, melon, watermelon). One type of the aforementioned fruit juices may be used alone, or two or more types of them may be used in combination. A preferred fruit juice is a juice from a citrus fruit, more preferably a juice from a citrus fruit selected from the group consisting of orange, grapefruit, and lemon.

The content of the fruit juice(s) in the beverage of the present invention is not particularly limited and is preferably not less than 0.5 w/w%, more preferably in the range of from 1 to 8 w/w%, still more preferably from 4 to 8 w/w%, in terms of percent fruit juice content.

In the present invention, the "percent fruit juice content" in a beverage shall be calculated according to the conversion expression mentioned below using the amount (g) of fruit juice(s) added to 100 ml of the beverage. Further, calculation of concentration factor shall be made as per the JAS guidelines, with the proviso that the sugar refractometer index for saccharides, honey, or the like added to a fruit juice is excluded.

$$\text{Percent fruit juice content (w/w\%)} =$$

$$\text{<fruit juice amount added (g)>} \times \text{<concentration factor>} / 100 \text{ mL} /$$

$$\text{<beverage's density>} \times 100$$

The fruit juice(s) can be of any forms, including a straight fruit juice used as freshly squeezed from a fruit, or a concentrated fruit juice obtained by concentrating a straight fruit juice. Also, a clear fruit juice or a cloudy fruit juice may be used. Further, use may be made of a fruit juice from whole fruit, prepared by crushing the whole fruit including husk and simply removing particularly coarse solid matters like seeds, a fruit purée prepared by sieving a fruit, or a fruit juice obtained by crushing or extracting a dried fruit pulp.

(Alcohol)

The fruit juice-containing alcoholic beverage of the present invention comprises an alcohol. The term "alcohol" as referred to herein refers to ethanol, unless otherwise specified.

The alcohol may be incorporated in the beverage by any given means. The beverage of the present invention can comprise a distilled liquor or a brewage, and preferably comprises a distilled liquor. The distilled liquor used in this invention is not limited by its source materials or by its preparation method. Examples of the distilled liquor include spirits (e.g., vodka, rum, tequila, gin, aquavit, Korn), neutral spirits, liqueurs, whiskeys (e.g., whiskey, brandy), and shochu.

The alcohol content in the beverage of the present invention is in the range of preferably from 1 to 10 v/v%, more preferably from 3 to 10 v/v%.

In the present invention, the alcohol content in the beverage can be measured by any known method -- for example, by a vibrational densimeter. To be specific, the beverage is filtered or sonicated to remove carbon dioxide gas, and the $CO_2$-free sample is distilled under direct fire. Then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

The type of the alcoholic beverage of the present invention is not particularly limited. Preferably, the alcoholic beverage of this invention is *chūhai* (shochu-based beverage), a cocktail, a sour, or the like.

The term *"chūhai"* (shochu-based beverage) is originally an abbreviation for "shochu highball" in Japanese. At present, there are various definitions of this term, but in general, this term refers to an alcoholic beverage made by diluting a distilled liquor with a different beverage. *Chūhai* is characterized by a clear taste with a good balance of liquor sensation, sweetness, sourness, and fruit sensation. The term "sour" also refers to an alcoholic beverage made by diluting a distilled liquor with a different beverage, and further containing a citrus fruit juice. The term "cocktail" refers to an alcohol beverage prepared by blending a base liquor with a fruit juice and/or the like.

(High intensity sweetener)

The term "high intensity sweetener" as used herein refers to a natural sweetener or synthetic sweetener having stronger sweetness than sucrose (*e.g.*, having sweetness several to several hundred times stronger than sucrose). Examples of such high intensity sweeteners include, but are not limited to: peptide sweeteners such as aspartame and alitame; glycosidic sweeteners, such as stevia sweeteners (including enzymatically treated stevia prepared by glucosylating a stevia extract or stevia by enzymatic treatment, and rebaudioside A which has the best sweetness profile among the sweet constituents of stevia) and glycyrrhiza extracts; sucrose derivatives such as sucralose; and synthetic sweeteners, such as acesulfame K and saccharin.

The beverage of the present invention contains no high intensity sweetener. As referred to above, "containing no high intensity sweetener" is not meant to exclude containing a tiny amount of a high intensity sweetener. To be specific, by stating that the beverage contains no high intensity sweetener, it is meant that the concentration of a high intensity sweetener is below the limit of detection of analysis, for example less than 10 ppm. The concentration of a high intensity sweetener can be measured by a known method such as HPLC .

(Sugar-free)

The alcoholic beverage of the present invention is an alcoholic beverage labeled as "sugar-free" as defined in the nutrition labeling standards under the health promotion act in Japan. To be specific, the content of sugar(s) (monosaccharides and disaccharides which are not sugar alcohols) in the beverage of this invention is less than 0.5 g per 100 g of the beverage.

Specific examples of the monosaccharides whose content is restricted include glucose, fructose, D-xylose, and L-arabinose. Examples of the disaccharides whose content is restricted include sucrose and lactose.

The content of the sugars in the alcoholic beverage of the present invention can be determined if a person skilled in the art requests Japan Food Research Laboratories to determine it. The content of the sugars in the inventive alcoholic beverage can also be measured by a common method such as high-performance liquid chromatography (HPLC). In another instance, the specific conditions for HPLC can be exemplified as follows.

Equipment used: HP1100 system, produced by HP
Column used: LiChrospher 100 NH2 (5 μm) (4 mm × 250 mm)
Mobile phase: Acetonitrile:water = 75:25
Flow rate: 1.0 mL/min.
Column temperature: 40°C

Injection volume: 10 μL
Detector: Sugar content/reflective index detector (Shodex RI-71)

(Carbon dioxide gas)

The beverage of the present invention may contain carbon dioxide gas. Carbon dioxide gas can be incorporated in a beverage using a method commonly known to skilled artisans. Examples of such commonly known methods include, but are not limited to, the following: carbon dioxide may be dissolved in a beverage under pressure; carbon dioxide and a beverage may be mixed in piping using a mixer such as a carbonator produced by Tuchenhagen GmbH; a beverage may be sprayed into a tank filled with carbon dioxide to cause the beverage to absorb carbon dioxide; or a beverage may be mixed with carbonic water. Any of such means is used, as appropriate, to adjust the pressure of carbon dioxide gas.

When the beverage of the present invention contains carbon dioxide gas, the pressure of carbon dioxide gas is not particularly limited, and is preferably in the range of from 0.7 to 3.5 kgf/cm$^2$, more preferably from 0.8 to 2.8 kgf/cm$^2$. In this invention, the carbon dioxide gas pressure can be measured using GVA-500A, a gas volume analyzer produced by Kyoto Electronics Manufacturing Co., Ltd. For example, with the sample temperature being adjusted to 20°C, a packaged beverage placed in the aforementioned gas volume analyzer is subjected to gas venting (snifting) and shaking, and then measured for carbon dioxide gas pressure. Unless otherwise specified herein, the carbon dioxide gas pressure refers to a carbon dioxide gas pressure at a temperature of 20°C.

(Freeze-crush-infusion liquor)

The beverage of the present invention may comprise a freeze-crush-infusion liquor of a fruit and/or vegetable. The content of the freeze-crush-infusion liquor is not limited, and is for example not less than 0.1 v/v%, or in the range of from 0.1 to 1 v/v%.

The freeze-crush-infusion liquor of a fruit and/or vegetable refers to an infusion liquor obtained by taking the steps of freezing at least one fruit and/or vegetable used as a source material to obtain a frozen product, finely crushing the frozen product to obtain a freeze-finely-crushed product, and infusing the finely-crushed product, as it is or after thawed into a paste form, in an alcohol-containing liquid.

The type of a fruit used to make the freeze-crush-infusion liquor is not limited. As mentioned above in connection with fruit juices, examples of fruits include, but are not limited to, citrus fruits (*e.g.*, orange, *Citrus unshiu,* grapefruit, lemon, lime, *Citrus junos, Citrus iyo, Citrus natsudaidai, Citrus hassaku, Citrus reticulata* var *poonensis, Citrus depressa, Citrus sphaerocarpa*), pomes (*e.g.,* apple, Japanese pear), drupes (*e.g.,* peach, Japanese apricot, apricot, Japanese plum, cherry), berries (*e.g.*, grape, blackcurrant, blueberry), tropical and subtropical fruits (*e.g.*, pineapple, guava, banana, mango, lychee), and fruity vegetables (*e.g.*, strawberry, melon, watermelon). A preferred fruit is a citrus fruit, more preferably a citrus fruit selected from the group consisting of orange, grapefruit, and lemon.

Except in special cases, examples of vegetables used to make the freeze-crush-infusion liquor include leaf and stem vegetables, fruit vegetables (excluding those handled as fruits on the market), flower vegetables, root vegetables, beans, and edible plant seeds. Other examples thereof include perilla, ginger, chili pepper, herbs (*e.g.*, mint, lemongrass, coriander, Italian parsley and rosemary)), and Japanese horseradish. Preferred examples of vegetables are tomato, celery, carrot, parsley, spinach, watercress, sweet pepper, lettuce, cabbage, beet, ginger (root ginger, leaf ginger), and perilla (blue perilla, red perilla).

The following provides descriptions of a freeze-crush-infusion liquor by citing a fruit as an example, but such descriptions shall also apply to a freeze-crush-infusion liquor of a vegetable, except in special cases.

Except in special cases, the term "fruit" or "vegetable", as referred to herein with respect to a source material, refers to a whole raw fruit or vegetable, including a juice and solid matters, and is distinguished from the "fruit juice" or "vegetable juice". Further, except in special cases, the term "fruit juice" or "vegetable juice", as used herein, refers to a fruit or vegetable juice preliminarily obtained by pressing or other processes, and does not include a fruit and/or vegetable juice which is to be contained in the final product or the like as a result of using a whole fruit and/or vegetable as a source material.

At a freezing step, a fruit and/or vegetable used as a source material is frozen and solidified. The type of a freezer and the freezing method used for freezing are not limited. Any of air freezing, air blast breezing, contact freezing, brine freezing, and liquid nitrogen freezing can be used. A preferred freezing method is liquid nitrogen freezing. The temperature of liquid nitrogen is -196°C. The temperature used for freezing is preferably equal to or below the brittle temperature for a fruit or vegetable used as a source material. As referred to herein, the term "brittle temperature" refers to a temperature at which an object becomes suddenly brittle (becomes brittle and easily fractured) due to low temperature. The brittle temperature can be determined by applying a conventional method performed for polymers.

The size of a fruit or vegetable subjected to a freezing step is not limited, as long as it is small enough to be put into a freezer. However, in order to achieve freezing in as short a time as possible, it may be better to cut a fruit or vegetable into small pieces. In order to freeze a fruit or vegetable without being damaged or exposed to air as much as possible, it may be better not to cut it into too small pieces. A whole fruit or vegetable, including pericarps and seeds, may be subjected to a freezing step, or a fruit or vegetable may be subjected to a freezing step after some parts containing non-edible parts and unfavorable components have been removed. Removal of such parts may be done after the freezing step. By taking the freezing step, a frozen product of a fruit or vegetable can be obtained.

At a fine crushing step, the frozen product is finely crushed. The type of a crusher and the fine crushing method used for this step are not limited. It is preferred to perform fine crushing at low temperatures, preferably under frozen conditions with the use of liquid nitrogen, such that the frozen product can be kept in a solidified state. The temperature of liquid nitrogen is -196°C. The extent of fine crushing is not particularly limited. The fine crushing is performed until the finely-crushed product obtained has an average particle diameter of preferably from about 1 $\mu$m to about 1000 $\mu$m, more preferably from 1 $\mu$m to about 200 $\mu$m, still more preferably from 1 $\mu$m to about 100 $\mu$m. As referred to herein, the "average particle diameter" refers to a median diameter (a particle diameter at 50% of a cumulative oversize distribution curve; also referred to as "median size" or "50% particle size"). By taking the fine crushing step, a freeze-finely-crushed product of a fruit and/or vegetable can be obtained.

Next, the obtained freeze-finely-crushed product is subjected to an infusion step. To be specific, the freeze-finely-crushed product is infused in an alcohol-containing liquid. The freeze-finely-crushed product may be subjected, as it is or after thawed into a paste form, to an infusion step. The temperature of the infusion step is not particularly limited, unless heat is applied. Also, the period of the infusion step is not limited, and is typically in the range of from about half a day to several months, or from about 1 day to about 3 days, or said period may be several months.

The "alcohol-containing liquid" refers to an ethanol-containing liquid that is drinkable or can be used for food production. The alcohol-containing liquid may contain water. Typically, the alcohol-containing liquid is a mixed liquid of ethanol and water, and examples thereof include distilled liquors and brewages as mentioned above. At the infusion step, the alcohol-containing liquid is preferably a distilled liquor including those exemplified above. The alcohol content in the alcohol-containing liquid used at the infusion step is in the range of preferably from about 15 v/v% to about 100 v/v%, more preferably from about 25 v/v% to about 60 v/v%.

The infusion ratio is also not limited, but is typically in the range of from about 1 g to about 500 g, from about 5 g to about 300 g, or from about 10 g to about 200 g, of the freeze-finely-crushed product per litter of the alcohol-containing liquid.

By taking the infusion step, an infusion liquor, *i.e.* a freeze-crush-infusion liquor, can be obtained. The infusion liquor may be used as it is or may be used after solid matters are removed through filtration.

In order to produce the beverage of the present invention, the above-obtained freeze-crush-infusion liquor can be mixed with other materials.

(Other components)

The beverage of the present invention may also have added thereto other components, including various additives commonly used in beverages, such as flavoring, vitamin, pigment, antioxidant, preservative, seasoning, extract, pH adjustor, and quality stabilizer, as long as such other components do not impair the effects of this invention.

(Packaged beverage)

The beverage of the present invention can be provided in a form packed in a package. Examples of the package form include, but are not limited to, metal package such as can, PET bottle, paper package, glass bottle, and pouch. A sterilized, packaged beverage product can be produced through, for example, taking the step of performing heat sterilization such as retort sterilization after the beverage of this invention is packed in a package, or the step of packing the beverage into a package after the beverage is sterilized.

(Production method)

In another aspect, the present invention is directed to a method for producing an alcoholic beverage containing a fruit juice or fruit juices and containing no high intensity sweetener. Said method comprises the steps of:

adjusting the total content of a monosaccharide or monosaccharides and a disaccharide or disaccharides excluding sugar alcohols in the beverage to less than 0.5 w/w%;
adjusting the total content of a polysaccharide or polysaccharides with a degree of polymerization of not less than 3 in the beverage to not less than 0.08 w/v%; and
adjusting the acidity in terms of citric acid in the beverage to not less than 0.1 g/100 mL.

The procedures for adjusting the contents of different components in the beverage are obvious from the descriptions given above in connection with the beverage of the present invention. The timings of making such adjustments are not limited. For example, the aforementioned steps may be performed simultaneously or separately, or may be performed in random order. Adjustments can be made in any way as long as the beverage finally obtained satisfies the aforementioned requirements. The types of different components, and their preferred ranges of contents, are as described above in connection with the beverage of this invention. Specific examples and contents of other additional components are also as described above in connection with the beverage of this invention.

Said production method may further comprise the steps of:

freezing at least one fruit and/or vegetable to obtain a frozen product;
finely crushing the frozen product to obtain a freeze-finely-crushed product;
infusing the finely-crushed product, as it is or after thawed into a paste form, in an alcohol-containing liquid to obtain an infusion liquor; and
mixing the infusion liquor with other material. In such a case, the aforementioned beverage comprises the infusion liquor.

The production method of the present invention can enhance a fruit sensation in a fruit juice-containing alcoholic beverage containing no high intensity sweetener, or can reduce an alcohol pungent sensation in such a beverage. Therefore, in another aspect, said production method is a method for enhancing a fruit sensation or reducing an alcohol pungent sensation in a fruit juice-containing alcoholic beverage containing no high intensity sweetener.

(Numerical ranges)

For the purpose of clarification, all numerical ranges defined herein by lower and upper limits, *i.e.* defined as "from lower limit to upper limit", include their lower and upper limits.

EXAMPLES

Hereunder, the present invention will be described by way of working examples, but this invention is not limited to these examples.

(Test Example 1) Problems observed in sugar-free alcoholic beverage, and effects of polysaccharide on those problems

When the content of sugars (monosaccharides and disaccharides which are not sugar alcohols) in an alcoholic beverage was varied and reduced to be in the so-called "sugar-free" range without the use of a high intensity sweetener, a decrease in a fruit sensation was observed. At the same time, an increase in an alcohol pungent sensation was also noted. Thus, investigation was made on the effects of a polysaccharide on sugar-free alcoholic beverages.

To be specific, specified amounts of lemon juice, citric acid, and neutral spirits were mixed with varied amounts of a sugar (or in some cases, no sugar) and water to prepare three different beverage samples which were equal in total amount. The amount of the sugars added to each of these beverage samples was 1 g/100 mL, 0.5 g/100 mL, or 0 g/100 mL (Samples A-1 to A-3, respectively). In these beverage samples, the content of lemon juice was 1 w/w% in terms of percent fruit juice content, the acidity was 0.1 g/100 mL in terms of citric acid, and the alcohol content was 7 v/v%. The sugars used were a fructose-glucose syrup.

Next, several different beverage samples (Samples A-4 to A-11) were prepared in the same way as the above-prepared sample (Sample A-3) with a sugar content of 0 g/100 mL, except that a polysaccharide was added. The polysaccharide used was polydextrose (Litesse, produced by Danisco Japan Ltd.).

The contents of the sugars and the polysaccharide in the different beverage samples are shown in the table given below. The polysaccharide contents indicated in the table are values calculated based on the polydextrose content in Litesse and the amount of Litesse used.

The prepared beverage samples were subjected to sensory evaluation by five trained panelists. The evaluation items consisted of a fruit sensation, a decrease in an alcohol sensation and/or a liquor sensation (equivalent to a decrease in an alcohol pungent sensation), and an overall rating. The extent of a decrease in an alcohol sensation and/or a liquor sensation was evaluated with Sample A-3 (a beverage containing no sugar or polysaccharide) being used as a reference. The rating scales used for the evaluation are as listed below. Unless otherwise specified, all the beverage samples were evaluated using these rating scales by the same five panelists. Additionally, before the evaluation, the panelists had shared a common understanding of different rating scores using reference samples corresponding to the respective rating scores.

(Fruit sensation)

1: No fruit sensation is perceived.
2: A slight fruit sensation is perceived.
3: A fruit sensation is perceived.
4: An excellent fruit sensation is perceived.
5: A particularly excellent fruit sensation is perceived.

(Decrease in alcohol sensation and/or liquor sensation)

1: No decrease in an alcohol sensation and/or a liquor sensation is perceived.
2: A slight decrease in an alcohol sensation and/or a liquor sensation is perceived.
3: A decrease in an alcohol sensation and/or a liquor sensation is perceived.
4: A significant decrease in an alcohol sensation and/or a liquor sensation is perceived.
5: A particularly significant decrease in an alcohol sensation and/or a liquor sensation is perceived.

The following table shows averages of scores given by the five panelists, together with other information.

[Table 1]

|  |  | 1. Fruit sensation | 2. Decrease in alcohol sensation/ liquor sensation | Sum of 1 & 2 |
| --- | --- | --- | --- | --- |
| A-1 | Sugar: 1g/100mL | 2.4 | 2.2 | 4.6 |
| A-2 | Sugar: 0.5g/100mL | 1.8 | 1.6 | 3.4 |
| A-3 | Sugar: 0g/100mL | 1.0 | 1.0 | 2.0 |
| A-4 | Sugar: 0g/100mL, Polysaccharide: 0.008w/v% | 1.8 | 1.4 | 3.2 |
| A-5 | Sugar: 0g/100mL, Polysaccharide: 0.04w/v% | 2.4 | 1.8 | 4.2 |
| A-6 | Sugar: 0g/100mL, Polysaccharide: 0.08w/v% | 3.4 | 2.4 | 5.8 |
| A-7 | Sugar: 0g/100mL, Polysaccharide: 0.24w/v% | 3.8 | 3.2 | 7.0 |
| A-8 | Sugar: 0g/100mL, Polysaccharide: 0.48w/v% | 4.8 | 3.8 | 8.6 |
| A-9 | Sugar: 0g/100mL, Polysaccharide: 0.8wvw% | 4.8 | 3.8 | 8.6 |
| A-10 | Sugar: 0g/100mL, Polysaccharide: 1.6w/v% | 4.6 | 4.0 | 8.6 |
| A-11 | Sugar: 0g/100mL, Polysaccharide: 2.4w/v% | 2.8 | 3.8 | 6.6 |

When the sugar content in alcoholic beverages was reduced without the use of a high intensity sweetener, a decrease in a fruit sensation and an increase in an alcohol pungent sensation were perceived. In contrast, when a polysaccharide was added to sugar-free alcoholic beverages, a fruit sensation was enhanced and an alcohol pungent sensation was reduced.

(Test Example 2) Effects of acidity

In this example, investigation was made on the effects of acidity.

To be specific, different beverage samples which differed only in acidity were prepared without the use of a high intensity sweetener but using the same materials as used to make Sample A-6 in Test Example 1. The acidity was adjusted using citric acid. In all of the prepared beverage samples, the sugar content was 0 g/100 mL, the content of lemon juice was 1 w/w% in terms of percent fruit juice content, the content of a polysaccharide (polydextrose) was 0.08 w/v%, and the alcohol content was 7 v/v%.

The following table shows the acidities of the prepared beverage samples, and the results of the sensory evaluation performed on these samples. As the acidity was increased, higher effects were observed.

[Table 2]

|  |  | 1. Fruit sensation | 2. Decrease in alcohol sensation/liquor sensation | Sum of 1 & 2 |
|---|---|---|---|---|
| B-1 | Acidity: 0.05g/100mL | 1.0 | 1.2 | 2.2 |
| B-2 | Acidity: 0.1g/100mL | 3.4 | 2.4 | 5.8 |
| B-3 | Acidity: 0.4g/100mL | 4.4 | 3.6 | 8.0 |
| B-4 | Acidity: 0.6g/100mL | 5.0 | 4.4 | 9.4 |

(Test Example 3) Effects of fruit juice content

In this example, investigation was made on the effects of fruit juice content.

To be specific, different beverage samples which differed only in fruit juice content were prepared without the use of a high intensity sweetener but using the same materials as used to make Sample A-6 in Test Example 1. In all of the prepared beverage samples, the sugar content was 0 g/100 mL, the content of a polysaccharide (polydextrose) was 0.08 w/v%, the acidity was 0.4 g/100 mL in terms of citric acid, and the alcohol content was 7 v/v%.

The following table shows the lemon juice contents in the prepared beverage samples in terms of percent fruit juice content, and the results of the sensory evaluation performed on these samples.

[Table 3]

|  |  | 1. Fruit sensation | 2. Decrease in alcohol sensation/liquor sensation | Sum of 1 & 2 |
|---|---|---|---|---|
| C-0 | Lemon juice: 0w/w% | 1.4 | 1.6 | 3.0 |
| C-1 | Lemon juice: 0.5w/w% | 3.2 | 2.6 | 5.8 |
| C-2 | Lemon juice: 1w/w% | 3.6 | 3.0 | 6.6 |
| C-3 | Lemon juice: 4w/w% | 4.2 | 3.4 | 7.6 |
| C-4 | Lemon juice: 8w/w% | 5.0 | 4.0 | 9.0 |

(Test Example 4) Type of polysaccharide

In this example, investigation was made on the effects of the types of polysaccharides used.

To be specific, different beverage samples were prepared without the use of a high intensity sweetener but using the same materials as used to make Sample A-6 in Test Example 1 except that the type of polysaccharide used was varied. In all of the prepared beverage samples, the sugar content was 0 g/100 mL, the content of lemon juice was 1 w/w% in terms of percent fruit juice content, the content of the polysaccharide was 0.1 w/v%, the acidity was 0.1 g/100 mL in terms of citric acid, and the alcohol content was 7 v/v%. The polysaccharides used were polydextrose (Litesse), indigestible dextrin (Sandec #150, produced by Sanwa Starch Co., Ltd.), oligosaccharide (Fujioligo #360, produced by Nihon Shokuhin Kako Co., Ltd.), pectin (GENU pectin type JM-150-J, produced by Sansho Co., Ltd.), and xanthan gum ((ST) San-Ace E-S, produced by San-Ei Gen F.F.I., Inc.).

The following table shows the types of polysaccharides used in the prepared beverage samples, and the results of the sensory evaluation performed on these samples. Any of the polysaccharides used were demonstrated to be effective.

[Table 4]

| | | 1. Fruit sensation | 2. Decrease in alcohol sensation/liquor sensation | Sum of 1 & 2 |
|---|---|---|---|---|
| D-1 | Polydextrose: 0.1w/w% | 3.4 | 2.4 | 5.8 |
| D-2 | Indigestible dextrin: 0.1w/v% | 3.2 | 2.6 | 5.8 |
| D-3 | Oligosaccharide: 0.1w/v% | 2.6 | 2.0 | 4.6 |
| D-4 | Pectin: 0.1w/v% | 2.2 | 2.0 | 4.2 |
| D-5 | Xanthan gum: 0.1w/v% | 1.8 | 1.6 | 3.4 |

(Test Example 5) Type of fruit juice

In this example, investigation was made on the effects of the types of fruit juices used.

To be specific, different beverage samples were prepared without the use of a high intensity sweetener but using the same materials as used to make Sample A-6 in Test Example 1 except that the type of fruit juice used was varied. In all of the prepared beverage samples, the sugar content was 0 g/100 mL, the content of fruit juice was 3 w/w% in terms of percent fruit juice content, the content of a polysaccharide (polydextrose) was 0.24 w/v%, the acidity was 0.3 g/100 mL in terms of citric acid, and the alcohol content was 7 v/v%. The fruit juices used were a lemon juice, a grapefruit juice, and a peach juice.

The following table shows the types of fruit juices and the amount of a polysaccharide used in the prepared beverage samples, and the results of the sensory evaluation performed on these samples. Effects were demonstrated in any of the cases where the fruit juices were used.

[Table 5]

| | | 1. Fruit sensation | 2. Decrease in alcohol sensation/liquor sensation | Sum of 1 & 2 |
|---|---|---|---|---|
| E-1 | Lemon Polysaccharide: 0.24w/v% | 4.2 | 3.0 | 7.2 |
| E-2 | Grapefruit Polysaccharide: 0.24w/v% | 3.2 | 3.2 | 6.4 |
| E-3 | Peach Polysaccharide: 0.24w/v% | 1.6 | 1.8 | 3.4 |

(Test Example 6) Effects of freeze-crush-infusion liquor

In this example, investigation was made on the effects of addition of a freeze-crush-infusion (FCI) liquor.

To be specific, different beverage samples were prepared without the use of a high intensity sweetener but using the same materials as used to make Sample A-6 in Test Example 1 except that a freeze-crush-infusion liquor was added in specified amounts. In all of the prepared beverage samples, the sugar content was 0 g/100 mL, the content of fruit juice was 1 w/w% in terms of percent fruit juice content, the content of a polysaccharide (polydextrose) was 0.08 w/v%, the acidity was 0.1 g/100 mL in terms of citric acid, and the alcohol content was 7 v/v%. The freeze-crush-infusion liquor used was a liquor obtained by freezing a lemon, finely crushing the frozen lemon at a temperature which is equal to or below its brittle temperature, and infusing the freeze-finely-crushed lemon in an alcohol-containing liquid.

The following table shows the amounts of the freeze-crush-infusion liquor used in the prepared beverage samples, and the results of the sensory evaluation performed on these samples. It was demonstrated that addition of the freeze-crush-infusion liquor led to enhanced effects.

[Table 6]

| | | 1. Fruit sensation | 2. Decrease in alcohol sensation/liquor sensation | Sum of 1 & 2 |
|---|---|---|---|---|
| F-1 | Lemon FCI liquor: 0v/v% | 3.4 | 2.4 | 5.8 |
| F-2 | Lemon FCI liquor: 0.1v/v% | 4.2 | 3.6 | 7.8 |
| F-3 | Lemon FCI liquor: 0.5v/v% | 4.8 | 4.0 | 8.8 |

(continued)

|  |  | 1. Fruit sensation | 2. Decrease in alcohol sensation/liquor sensation | Sum of 1 & 2 |
|---|---|---|---|---|
| F-4 | Lemon FCI liquor: 1v/v% | 5.0 | 3.8 | 8.8 |

## Claims

1. An alcoholic beverage containing a fruit juice or fruit juices and containing no high intensity sweetener, wherein:

   the total content of a monosaccharide or monosaccharides and a disaccharide or disaccharides excluding sugar alcohols is less than 0.5 w/w%;
   the total content of a polysaccharide or polysaccharides with a degree of polymerization of not less than 3 is not less than 0.08 w/v%; and
   the acidity is not less than 0.1 g/100 mL in terms of citric acid.

2. The beverage according to claim 1, wherein the total content of the fruit juice(s) is not less than 0.5 w/w% in terms of percent fruit juice content.

3. The beverage according to claim 2, wherein the fruit juice(s) is a citrus fruit juice.

4. The beverage according to any one of claims 1 to 3, wherein the fruit juice(s) is a cloudy fruit juice.

5. The beverage according to any one of claims 1 to 4, wherein the alcohol content is in the range of from 1 to 10 v/v%.

6. The beverage according to any one of claims 1 to 5, wherein the polysaccharide(s) is a dietary fiber.

7. The beverage according to claim 6, wherein the dietary fiber is at least one selected from the group consisting of indigestible dextrin and polydextrose.

8. The beverage according to any one of claims 1 to 7, wherein the beverage contains carbon dioxide.

9. The beverage according to any one of claims 1 to 8, wherein the beverage contains a freeze-crush-infusion liquor of a fruit and/or vegetable.

10. A method for producing an alcoholic beverage containing a fruit juice or fruit juices and containing no high intensity sweetener, the method comprising the steps of:

    adjusting the total content of a monosaccharide or monosaccharides and a disaccharide or disaccharides excluding sugar alcohols in the beverage to less than 0.5 w/w%;
    adjusting the total content of a polysaccharide with a degree of polymerization of not less than 3 in the beverage to not less than 0.08 w/v%; and
    adjusting the acidity in the beverage to not less than 0.1 g/100 mL in terms of citric acid.

11. The method according to claim 10, further comprising the steps of:

    freezing at least one fruit and/or vegetable to obtain a frozen product;
    finely crushing the frozen product to obtain a freeze-finely-crushed product;
    infusing the finely-crushed product, as it is or after thawed into a paste form, in an alcohol-containing liquid to obtain an infusion liquor; and
    mixing the infusion liquor with other material;
    wherein the beverage comprises the infusion liquor.

## INTERNATIONAL SEARCH REPORT

| | International application No. |
|---|---|
| | **PCT/JP2022/001926** |

**A.    CLASSIFICATION OF SUBJECT MATTER**

*C12G 3/04*(2019.01)i
FI:   C12G3/04

According to International Patent Classification (IPC) or to both national classification and IPC

**B.    FIELDS SEARCHED**

Minimum documentation searched (classification system followed by classification symbols)

C12G3/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | CN 103484327 A (NANJING NIANJI FROZEN FOOD CO., LTD.) 01 January 2014 (2014-01-01) | 1-6, 8, 10 |
| | claims 1-3, examples | |
| Y | claims 1-3, examples | 9, 11 |
| X | JP 2019-193602 A (SAN-EI SUCROCHEMICAL CO., LTD.) 07 November 2019 (2019-11-07) | 1--8, 10 |
| | claims 1-7, examples 24-27, comparative example 12 | |
| Y | claims 1-7, examples 24-27, comparative example 12 | 9, 11 |
| X | JP 2019-080545 A (SAPPORO BREWERIES LTD.) 30 May 2019 (2019-05-30) | 1--8, 10 |
| | claims 1-5, examples | |
| Y | claims 1-5, examples | 9, 11 |
| Y | WO 2009/017115 A1 (SUNTORY LTD.) 05 February 2009 (2009-02-05) | 1-11 |
| | claims 1-7, examples | |
| Y | WO 2009/104660 A1 (SUNTORY HOLDINGS LTD.) 27 August 2009 (2009-08-27) | 1-11 |
| | claims 1-7, examples | |

☑ Further documents are listed in the continuation of Box C.       ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **18 February 2022** | **01 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/001926**

### C. DOCUMENTS CONSIDERED TO BE RELEVANT

| Category* | Citation of document, with indication, where appropriate, of the relevant passages | Relevant to claim No. |
|---|---|---|
| Y | JP 2016-154520 A (TAKARA SHUZO CO., LTD.) 01 September 2016 (2016-09-01) claims 1-6, examples | 1-11 |
| Y | JP 2019-097510 A (ASAHI BREWERIES, LTD.) 24 June 2019 (2019-06-24) claims 1-10, examples | 1-11 |
| Y | JP 2011-142890 A (SUNTORY HOLDINGS LTD.) 28 July 2011 (2011-07-28) claim 10, paragraph [0014] | 1-11 |
| Y | JP 2020-092636 A (SAPPORO BREWERIES LTD.) 18 June 2020 (2020-06-18) claims 1-5 | 1-11 |
| Y | JP 2020-188743 A (ASAHI BREWERIES, LTD.) 26 November 2020 (2020-11-26) claims 1-13, examples | 1-11 |
| Y | WO 2006/009252 A1 (SUNTORY LTD.) 26 January 2006 (2006-01-26) claims 1-12 | 9, 11 |
| A | WO 2015/064748 A1 (SUNTORY HOLDINGS LTD.) 07 May 2015 (2015-05-07) paragraph [0051] | 1-11 |
| A | JP 2018-088867 A (SUNTORY HOLDINGS LTD.) 14 June 2018 (2018-06-14) claims 1-14, example 9-2 | 1-11 |

Form PCT/ISA/210 (second sheet) (January 2015)

15

**INTERNATIONAL SEARCH REPORT**
Information on patent family members

International application No.

**PCT/JP2022/001926**

| Patent document cited in search report | | | Publication date (day/month/year) | Patent family member(s) | | | Publication date (day/month/year) |
|---|---|---|---|---|---|---|---|
| CN | 103484327 | A | 01 January 2014 | (Family: none) | | | |
| JP | 2019-193602 | A | 07 November 2019 | (Family: none) | | | |
| JP | 2019-080545 | A | 30 May 2019 | (Family: none) | | | |
| WO | 2009/017115 | A1 | 05 February 2009 | US | 2011/0177225 | A1 | |
| | | | | claims 1-10, examples | | | |
| | | | | EP | 2180036 | A1 | |
| | | | | AU | 2008283375 | A | |
| | | | | CA | 2694903 | A | |
| | | | | KR | 10-2010-0054135 | A | |
| | | | | CN | 101765656 | A | |
| | | | | RU | 2010107192 | A | |
| | | | | TW | 200923082 | A | |
| | | | | TW | 200923083 | A | |
| WO | 2009/104660 | A1 | 27 August 2009 | US | 2011/0008516 | A1 | |
| | | | | claims 1-19, examples | | | |
| | | | | EP | 2248885 | A1 | |
| | | | | AU | 2009216261 | A | |
| | | | | CA | 2714022 | A | |
| | | | | MX | 2010009068 | A | |
| | | | | CN | 101952410 | A | |
| | | | | RU | 2010138544 | A | |
| | | | | KR | 10-2010-0119542 | A | |
| | | | | TW | 201009070 | A | |
| JP | 2016-154520 | A | 01 September 2016 | (Family: none) | | | |
| JP | 2019-097510 | A | 24 June 2019 | (Family: none) | | | |
| JP | 2011-142890 | A | 28 July 2011 | (Family: none) | | | |
| JP | 2020-092636 | A | 18 June 2020 | (Family: none) | | | |
| JP | 2020-188743 | A | 26 November 2020 | (Family: none) | | | |
| WO | 2006/009252 | A1 | 26 January 2006 | US | 2009/0087526 | A1 | |
| | | | | claims 1-12 | | | |
| | | | | EP | 1792974 | A1 | |
| | | | | CA | 2574871 | A | |
| | | | | CN | 101023162 | A | |
| | | | | AU | 2005264590 | A | |
| | | | | KR | 10-2007-0050444 | A | |
| | | | | TW | 201418453 | A | |
| WO | 2015/064748 | A1 | 07 May 2015 | US | 2016/0326472 | A1 | |
| | | | | table 4 | | | |
| | | | | EP | 3064566 | A1 | |
| JP | 2018-088867 | A | 14 June 2018 | (Family: none) | | | |

Form PCT/ISA/210 (patent family annex) (January 2015)

**REFERENCES CITED IN THE DESCRIPTION**

**Patent documents cited in the description**

- JP 2011135837 A
- JP 2013126393 A

- WO 2006009252 A

**Non-patent literature cited in the description**

- *National Tax Agency Directive,* 22 June 2007, (6